# EUROPEAN PATENT APPLICATION

(11) **EP 4 775 102 A1**
(43) Date of publication of application: **15.07.2026**
(21) Application number: 26150748.7
(22) Date of filing: 08.01.2026
(51) Int. Cl.: A47J 31/36, A47J 31/44

(54) **MACHINE FOR PREPARING INFUSED BEVERAGES**

(30) Priority: 10.01.2025 IT 202500000279
(71) Applicant: Capitani S.r.l., 22043 Solbiate con Cagno (CO) (IT)
(72) Inventor: CAPITANI, Gionata, Albiolo (CO) (IT)
(74) Representative: Fabiano, Piero

(57) **Abstract**

A machine for preparing infused beverages, such for example coffee, of the type operating with pods or capsules containing aromatic essences is described, comprising:
- an infusion assembly (1), comprising:
- a first cup-shaped infusing element (2) provided with a cavity (9) for accommodating an infusion pod (20) therein and a second infusing element (3) cooperating with said first infusing element (2) so as to define an infusion chamber when coupled thereto;
- said first infusing element (2) comprising a first (4) and a second (5) portion coupled along an extent direction (X-X) in a mutually sliding way to increase or compact the extent in the extent direction X-X of said first infusing element (2);
- said first infusing element (2) and said second infusing element (3) are supported by a supporting frame (7) integral with said machine (10).

## Description

### Field of the invention

The present invention concerns the field of machines for making infused beverages such as coffee, tea, herbal teas, chocolate, etc. starting from a capsule or pod containing an aromatic substance.

### Known art

The use of machines for generating infused beverages of different flavors, for example coffee, tea or aromatic herbal teas, is known.

A particular type of the aforesaid machines, using disposable capsules or pods, is recently witnessing an ever increasing diffusion; such capsules or pods contain a predefined single portion of substance to be subjected to infusion, for example coffee, thus the aforementioned machines are appropriate for combining great simplicity/versatility of use with optimal organoleptic properties of the beverage.

The machines generally have an infusion assembly, an exchanger and a recirculation pump operatively connected.

Known infusion assemblies for coffee machines generally comprise a first cup-shaped infusing element, generally named female infuser, comprising a cavity adapted for housing an infusion capsule and/or pod containing an aromatic essence, and a second element, generally named male infuser, adapted for closing the aforesaid cavity to define an infusion chamber together with the first infusing element.

The capsule, or pod, containing the aromatic essence is placed or transported into the infusion chamber so that the extraction of the aromatic essence occurs with the injection of pressurized hot water into the infusion capsule and/or pod.

The infusion chamber communicates with at least one outlet duct for the infused beverage, ending with an outlet nozzle or hopper for the outflow of the beverage.

Generally, the female infuser of an infusion assembly is sized according to a specific pod or capsule, or vice-versa, so that the respective infusion assembly can operate properly with that pod or capsule only, for example produced by the manufacturer of the machine.

The Applicant has observed that, by changing the pod or capsule used, problems may arise when closing the infusion assembly, by way of example the male infuser may not hermetically close onto the female infuser or vice-versa, thus generating losses during the infusion step.

Instead, if the pod or capsule should be undersized compared to the closed infusion chamber, there could be a drop in pressure in the infusion chamber and a consequent lower mixing efficiency with the powdered substance present in the capsule or pod.

The Applicant has further observed that any gaskets intended to hermetically close the infusion chamber become thinner over time, thus causing losses between the female and male infusing elements.

The Applicant has further observed that in vertically extending infusion chambers, i.e. those in which the displacement from the closed position to the open position of the female and/or male infuser occurs along a vertical axis with respect to the bearing plane of the machine, the distance between the male and female infusers in the open position is minimal, thus being able to cause burns or small scalds to the user when positioning or removing the pod or capsule into/from the female infuser or making any cleaning operation burdensome.

Object of the present invention is to overcome the drawbacks mentioned above with reference to the infusion assemblies of the known art.

In particular, an object of the invention is to make a machine for preparing infused beverages which allows the closure of the infusion assembly to be adapted to different shapes and/or sizes of the pods or capsules used or to the thinning of the gaskets placed therein.

Another object of the present invention is to provide a vertically extending infusion assembly which is configured so as to protect users from possible burns or scalds when inserting the pod or capsule and to facilitate its inner cleaning.

### Summary of the invention

Therefore, in its first aspect, the invention concerns a machine for preparing infused beverages, such as coffee, of the type operating with pods or capsules containing aromatic essences, comprising:
- an infusion assembly, comprising:
- a first cup-shaped infusing element provided with a cavity for accommodating an infusion pod therein and a second infusing element cooperating with said first infusing element so as to define an infusion chamber when coupled thereto;
- the first infusing element comprising a first and a second portion
coupled along an extent direction in a mutually sliding way to increase or compact the extent in the extent direction of the first infusing element;
- the first infusing element and the second infusing element are supported by a supporting frame integral with the machine.

In the aforesaid aspect, the present invention can have at least one of the preferred characteristics described hereunder.

In the scope of the present invention, "vertical", "vertically" means a direction that is substantially orthogonal to or slightly inclined from a bearing plane of the machine in use.

"Radial" or "Radially" means a direction generically away from the symmetry or central axis of the cavity of the infusion assembly containing the pod or capsule.

Advantageously, the supporting frame is a box-shaped frame supporting the second infusing element and the first infusing element in a removable way. Said first and second portions of the first infusing element are preferably coupled so as to be able to rotate one with respect to the other, to be able to mutually slide and increase or decrease the extent in the extent direction of the first infusing element.

Said first and/or second portions of the first infusing element preferably comprise(s) an inclined coupling profile configured such that the rotation of the first or second portion in a direction involves the sliding of the first and second portions along the inclined coupling profile and, consequently, the expansion of the first infusing element, vice-versa, the rotation of the first or second portion in the opposite direction involves the sliding of the first and second portions in the opposite direction along the inclined coupling profile and, consequently, compaction of the first infusing element.

The first infusing element preferably comprises a supporting element configured for supporting the first infusing element in a designated seat of the supporting frame.

Conveniently, the first infusing element has coupling means configured for rotatably coupling said first portion to said second portion.

Advantageously, the coupling means comprise at least two pins integral with the first portion of the first infusing element and sliding in two curvilinear slots of the second portion.

The supporting element is preferably translatable together with the first infusing element, with respect to said supporting frame, substantially orthogonally to said extent direction between a first position, in which the first infusing element is substantially aligned with the second infusing element, inside the supporting frame, and a second position in which the supporting element is extracted from the supporting frame together with the first infusing element.

The supporting element preferably has a seat for loosely housing the first infusing element.

Conveniently, the supporting element comprises a pair of guides that can be combined with a pair of corresponding projections of the supporting frame to allow the aforesaid guides to slide with respect to the projections, thus allowing the supporting element to translate from the first to the second position and vice-versa.

### Brief description of the drawings

That description will be set forth hereunder with reference to the accompanying drawings provided by way of example only and therefore not limiting, in which:
- figure 1 shows a schematic perspective view of a machine for preparing infused beverages with the first infusing element together with its supporting element extracted from the supporting frame, and thus from the machine, according to the present invention;
- figure 2 shows a schematic perspective view of a machine for preparing infused beverages with the first infusing element together with its supporting element inserted into the appropriate seat of the supporting frame, according to the present invention;
- figure 3 shows a schematic perspective view of a portion of a machine for preparing infused beverages with the first and the second infusing elements closed to form the infusion chamber, with the pod inserted, according to the present invention;

- figure 4 shows a schematic perspective view of the first infusing element, in its expanded configuration, according to the present invention; and
- figure 5 shows a schematic perspective view of the first infusing element, in its contracted configuration, according to the present invention.

### Detailed description of embodiments of the invention

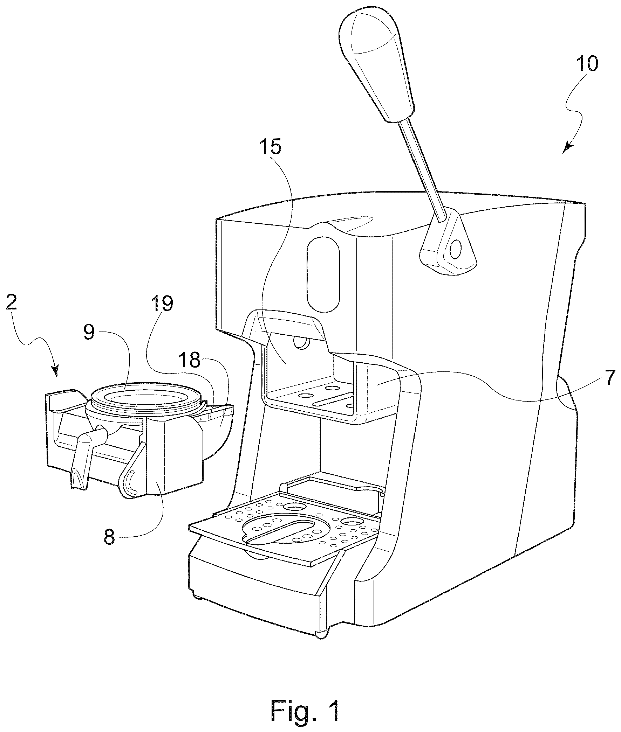

With reference to the figure 1, a machine for preparing an infused beverage by means of a capsule or pod containing an aromatic substance according to the present invention is shown.

The machine for preparing an infused beverage precisely comprises an infusion assembly 1 and an outer shell configured for at least partially containing the infusion assembly 1.

The infusion assembly 1, as shown in the figures, comprises a first cup-shaped infusing element 2 provided with a cavity 9 for accommodating an infusion pod or capsule 20 therein, and a second infusing element 3 cooperating with the first infusing element 2 so as to define an infusion chamber when coupled thereto.

In a known way, the pod 20 comprises a disc-shaped body formed by two substantially disc-shaped side walls, typically an upper one and a lower one, which are joined to form a containment cavity between them configured to contain a specified amount of a powdered substance for the infusion, such as for example powdered coffee.

The first infusing element 2 and the second infusing element 3 are supported by a supporting frame 7.

For example, said supporting frame 7 has a parallelepiped box-shaped structure mainly extending along a main axis X-X which can be vertical, in a preferred embodiment.

At least one of said first infusing element 2 and said second infusing element 3 is a movable infuser.

Said movable infuser is preferably vertically translatable to be brought close to or away from the remaining infusing element, so as to open or close the infusion chamber.

In the embodiment shown in the figures, the first infusing element 2 is substantially fixed with respect to the vertical translational movement for opening or closing the infusion assembly 1, while the second infusing element 3 is a vertically movable element.

The second infusing element 3, which in the embodiment illustrated is actually the movable infuser, is movable between an open position, in which it is at the maximum, preferably vertical, distance from the first infusing element 2, so as to allow the insertion of the pod 20, and a closed position, in which it is side-by-side with the first infusing element 2, so as to form the infusion chamber with the latter.

In the embodiments shown in the figures, the first infusing element 2 is actually the fixed infuser, with respect to the preferably vertical movement for opening/closing the infusion chamber, and is preferably formed of a first 4 and a second 5 portion configured to be coupled together.

At its upper end, the first portion 4 has the cavity 9 for accommodating the infusion pod 20 therein.

The first 4 and second 5 portion are coupled so as to be able to rotate one with respect to the other, to be able to mutually slide one in the other and increase or reduce the extent in the extent direction X-X of the first infusing element 2.

In the embodiment shown in the figures, the extent direction coincides with the vertical direction, i.e. a direction substantially orthogonal to the bearing plane of the machine 10 for preparing infused beverages.

The first 4 and second 5 portion are substantially cylinder-shaped and, when coupled, are arranged concentrically so that one is sized to wrap and contain the remaining one in radial direction, at least for an extent length thereof in the direction X-X, i.e. vertical in the figure.

In the embodiment shown in the figures, the first portion 4 wraps and contains the second portion 5 in radial direction.

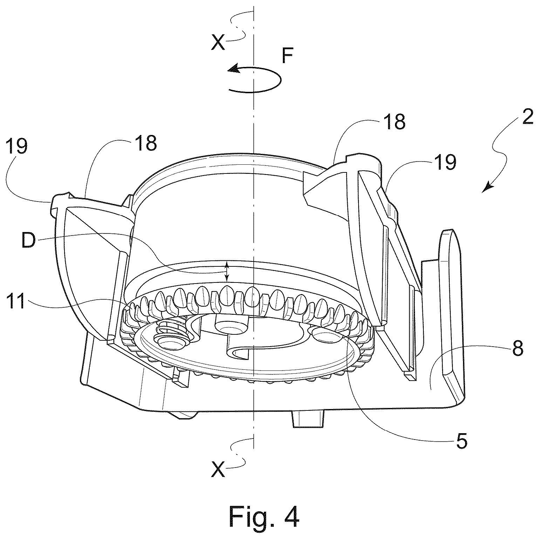

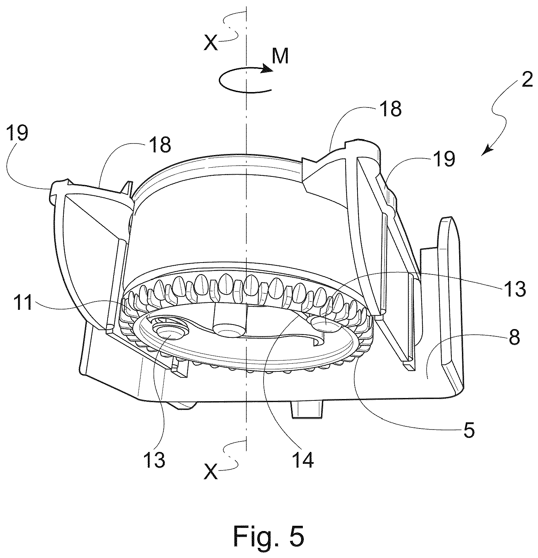

The first 4 and/or second 5 portion of the first infusing element 2 preferably comprise(s) an inclined coupling profile configured so that the rotation of the first 4 or second 5 portion in a direction involves the sliding of the first 4 and second 5 portion along the inclined coupling profile and, consequently, the expansion of the first infusing element 2 (shown in figure 4). Vice-versa, the rotation of the first 4 or second 5 portion in the opposite direction involves the sliding of the first 4 and second 5 portion in the opposite direction along the inclined coupling profile and, consequently, the compaction of the first infusing element 2 (shown in figure 5).

The rotation of the second portion 5 in the anticlockwise direction (denoted by the arrow F) relative to the first portion 4, with the consequent expansion of the first infusing element 2 in the vertical direction X-X, is shown in figure 4.

To facilitate the rotation of the second portion 5 with respect to the first portion 4, the second portion has a ring nut 11 manually operable by the operator.

The expansion of the infusing element 2 is visible in figure 4 by the space D created between the first portion 4 and the ring nut 11 of the second portion 5.

The expansion of the infusing element 2 displaces the cavity 9 for housing the capsule 20 upward in the vertical direction, to fit different pods 20.

The rotation of the second portion 5 in the clockwise direction (denoted by the arrow M) relative to the first portion 4, with the consequent contraction of the first infusing element 2 in the vertical direction X-X, is instead shown in figure 5.

The inclined coupling profiles, not directly shown in the figures, are respectively formed on an inner side surface of the first portion 4 and on an outer side surface, facing the previous one in radial direction, of the second portion 5.

The first infusing element 2 preferably has coupling means configured for rotatably coupling the first portion 4 to the second portion 5.

In the embodiment shown in the figures, the coupling means comprise at least two pins 13 integral with the first portion 4 and extending in the extent direction X-X. The pins 13 are sliding in two curvilinear slots 14 formed on the second portion 5.

The pins 13 can have an enlarged end head which locks the second portion 5 on the first portion 4, anyhow allowing the mutual rotation of the two portions.

The first infusing element 2 further comprises a supporting element 8 configured for supporting the first infusing element 2 in a designated seat 15 of the supporting frame 7.

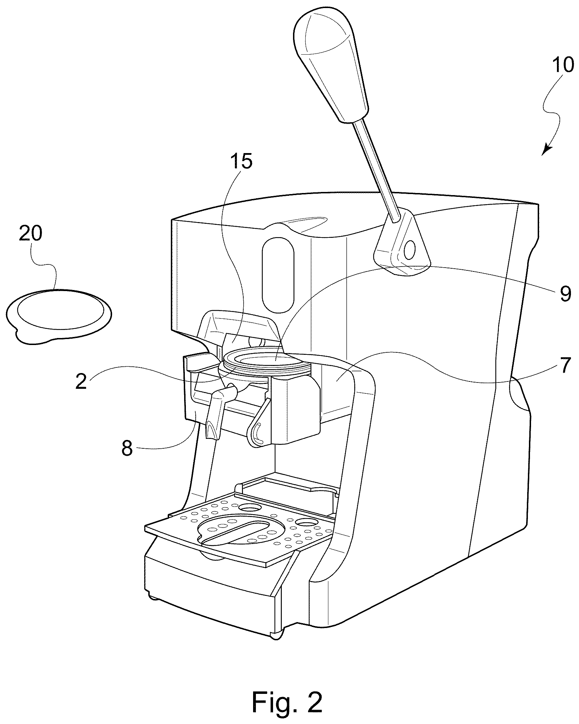

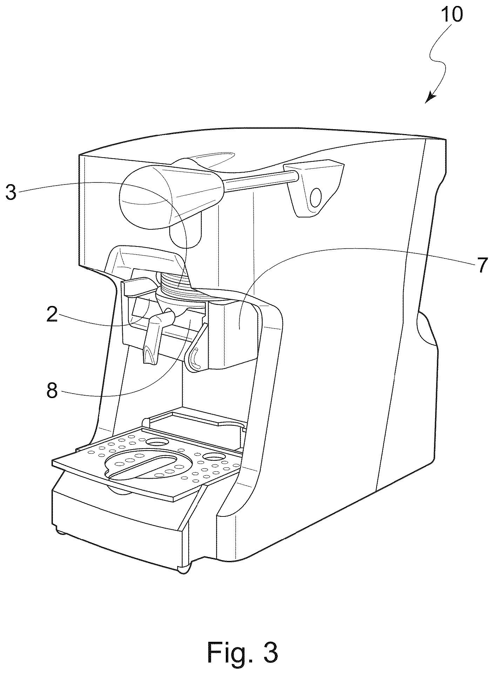

The supporting element 8 is translatable together with the first infusing element 2 with respect to the supporting frame 7, substantially orthogonally to the extent direction X-X between a first position (shown in figures 2 and 3), in which the first infusing element 2 is substantially aligned with the second infusing element 3, inside the seat 15 of the supporting frame 7, and a second position (shown in figure 4) in which the supporting element 8 is extracted from the supporting frame 7 together with the first infusing element 2.

This way, the risk of causing burns or small scalds to the user when positioning or removing the pod or capsule inside/from the female infuser is significantly reduced, this operation occurring away from the heated portions of the machine.

In order to be able to support the first infusing element but simultaneously ensure the angular mutual sliding of the first 4 and second 5 portion, the supporting element 8 preferably has a seat 17 for loosely housing the first infusing element 2.

The seat 17 comprises two arms 18 which partially, preferably almost completely, surround the first portion 4, anyhow ensuring its sliding in the extent direction X-X.

In the embodiment shown in the figures, the supporting element 8 further has a pair of guides 19, arranged outside the arms 18, that can be combined with a pair of corresponding projections 20 provided in the seat 15 of the supporting frame 7.

This way, the guides 19 are allowed to slide with respect to the projections 20, thus allowing the supporting element 8 to translate from the first to the second position of the first infusing element and vice-versa.

Several modifications can be made to the embodiments described in detail, all anyhow remaining within the protection scope of the invention, as defined by the following claims.

## Claims

1. Machine (10) for preparing infused beverages, such as for example coffee, of the type operating with pods or capsules containing aromatic essences, comprising:
- an infusion assembly (1), comprising:
- a first cup-shaped infusing element (2) provided with a cavity for accommodating an infusion pod (20) therein and a second infusing element (3) cooperating with said first infusing element (2) so as to define an infusion chamber when coupled thereto;
- said first infusing element (2) comprising a first (4) and a second (5) portion coupled along an extent direction (X-X) in a mutually sliding way to increase or compact the extent in the extent direction X-X of said first infusing element (2);
- said first infusing element (2) and said second infusing element (3) are supported by a supporting frame (7) integral with said machine (10).

2. Machine (10) for preparing infused beverages according to claim 1, **characterized in that** said first (4) and second (5) portion of said first infusing element (2) are coupled so as to be able to rotate one with respect to the other, to be able to mutually slide and increase or decrease the extent in the extent direction (X-X) of said first infusing element (2).

3. Machine for preparing infused beverages according to claim 2, **characterized in that** said first and/or said second portions of the first infusing element (2) comprise(s) an inclined coupling profile configured such that the rotation of said first (4) or said second (5) portion in a direction involves the sliding of said first (4) and second (5) portion along the inclined coupling profile and, consequently, the expansion of the first infusing element (2), vice-versa, the rotation of said first (4) or said second (5) portion in the opposite direction involves the sliding of said first (4) and second (5) portion in the opposite direction along the inclined coupling profile and, consequently, compaction of said first infusing element (2).

4. Machine for preparing infused beverages according to any one of the preceding claims, **characterized in that** the first infusing element (2) comprises a supporting element (8) configured for supporting said first infusing element (2) in a designated seat (9) of said supporting frame (7).

5. Machine for preparing infused beverages according to any one of the preceding claims, **characterized in that** the first infusing element (2) has coupling means configured for rotatably coupling said first portion (4) to said second portion (5).

6. Machine for preparing infused beverages according to claim 5, **characterized in that** said coupling means comprise at least two pins integral with said first portion (4) of the first infusing element (2) and sliding in two curvilinear slots of said second portion (5).

7. Machine (10) for preparing infused beverages according to any one of claims 4 to 6, **characterized in that** said supporting element (8) is translatable together with said first infusing element (2),with respect to said supporting frame (7), substantially orthogonally to said extent direction (X-X) between a first position, in which said first infusing element (2) is substantially aligned with said second infusing element (3), inside said supporting frame (7), and a second position in which said supporting element (8) is extracted from said supporting frame (7) together with said first infusing element (2).

8. Machine (10) for preparing infused beverages according to any one of claims 4 to 7, **characterized in that** said supporting element (8) has a seat for loosely housing said first infusing element (2).

9. Machine (10) for preparing infused beverages according to any one of claims 4 to 8, **characterized in that** said supporting element (8) comprises a pair of guides (9) that can be combined with a pair of corresponding projections of said supporting frame (7) to allow said guides to slide with respect to said projections, thus allowing the supporting element to translate from the first to the second position and vice-versa.
